# EUROPÄISCHE PATENTANMELDUNG

(11) **EP 2 003 796 A1**
(43) Veröffentlichungstag der Anmeldung: **17.12.2008**
(21) Anmeldenummer: 08450088.3
(22) Anmeldetag: 05.06.2008
(51) Int. Cl.: H04B 10/135, G02F 1/35, H04B 10/08

(54) **Verfahren und Vorrichtung zum Nachregeln einer Polarisationsdrift**

(30) Priorität: 15.06.2007 AT 9332007
(71) Anmelder: Austrian Research Centers Gmbh - Arc, 1220 Vienna (AT)
(72) Erfinder: Poppe, Andreas, 2380 Perchtoldsdorf (AT)
(74) Vertreter: Sonn & Partner Patentanwälte

(57) **Zusammenfassung**

Zum Nachregeln einer Polarisationsdrift bei der Übertragung eines polarisationscodierten optischen Signals von einem Sender (2) über einen Lichtleiter (11) zu einem Empfänger (3) werden auf der Seite des Senders (2) optische Hilfs-Signale mit der selben Wellenlänge wie das polarisationscodierte Signal sowie mit voneinander verschiedenen Polarisationen, entsprechend einer ersten und einer zweiten Basis, in den Lichtleiter (11) eingespeist, während die Übertragung des polarisationscodierten Signals unterbrochen wird, und auf der Seite des Empfängers (3) werden die optischen Hilfs-Signale vom Lichtleiter (11) abgenommen und mittels eines Polariometers (16) hinsichtlich Verschiebungen der unterschiedlichen Polarisationen überprüft, wonach beim Feststellen von Polarisations-Verschiebungen über einen dem Lichtleiter (11) zugeordneten Polarisationsregler (18) die unterschiedlichen, bei der Übertragung verschobenen Polarisationen in Richtung der Polarisations-Sollwerte verschoben werden.

## Beschreibung

Die Erfindung betrifft allgemein die Nachregelung der Polarisationsdrift, verursacht von optischen Fasern z.B. für polarisationscodierte q-bits.

Mehr im Einzelnen bezieht sich die Erfindung auf ein Verfahren und eine Vorrichtung wie in den einleitenden Teilen der unabhängigen Ansprüche angegeben.

Polarisation wird für klassische optische Kommunikation nur bedingt verwendet, weil diese Eigenschaft des Lichts in optischen Fasern (Lichtleitern) stark beeinflusst wird. Wegen kleinster Abweichungen der normalerweise runden Fasergeometrie bildet sich Doppelbrechung mit einer schnellen und einer langsamen Achse aus, die bewirkt, dass das Licht mit den jeweiligen Polarisationen unterschiedlich schnell transportiert wird. Die Achse gibt die Richtung des elektrischen Feldvektors an und weist immer senkrecht zur Ausbreitungsrichtung. Die Lage der Achsen in der Faser ist undefiniert in dem Sinn, dass sowohl die schnelle als auch die langsame Achse in alle Richtungen weisen kann, aber beide Achsen stehen immer senkrecht aufeinander.

Wird polarisiertes Licht genau in Achsenrichtung einer Faser eingekoppelt, behält es über typischerweise hunderte Meter seine Polarisation, bis die Achsen leicht in der Lage driften. Allerdings ist die Ausgangslage der Achsen unbekannt. Abhängig vom Winkel der Einkopplung teilt sich die Lichtleistung auf die langsame und schnelle Achse auf und verliert innerhalb weniger Zentimeter Ausbreitungsdistanz ihre ursprüngliche Lage: Bewirkt die unterschiedliche Ausbreitungsgeschwindigkeit ein Auseinanderlaufen der Wellenpakete bereits um Teile der Wellenlänge, können sich diese zwar noch überlagern, aber es wird sich eine andere Polarisation einstellen. Diese Veränderung der Polarisation bewirkt, dass innerhalb kürzester Faserstrecken die Polarisation nicht mehr vorhersagbar ist. Zusätzlich ist diese Drift stark abhängig vom mechanischen Druck auf Glasfasern und deshalb natürlich auch zeit- und temperaturabhängig.

Trotz dieser Umstände ist es möglich, in der herkömmlichen Übertragungstechnik in Glasfasern mithilfe der Polarisation die Kapazität im Prinzip zu verdoppeln. Die in der einen Basis übertragene Information ist unabhängig von der Information der anderen Basis und in diesem Schema achtet man darauf, dass die beiden Basen einander nicht stören. Dabei werden zwei idente optische Laserdioden (mit gleicher Wellenlänge der Strahlung) mit der Information zweier Übertragungskanäle moduliert, wobei als einziger Unterschied gewählt wird, dass die jeweiligen Polarisationen senkrecht aufeinander stehen. Mithilfe bereits kommerziell erhältlicher Geräte zur Nachregelung (vergl.:
http://www.thorlabs.com/thorProduct.cfm?partNumber=PL100S www.b-fioptilas.de; http://www.generalphotonics.com/PolaStay.htm) kann gewährleistet werden, dass eine in einer Basis eingestrahlte Polarisation (z.B. horizontal oder vertikal) am Empfänger weiterhin in dieser Polarisation empfangen wird. Der zweite Kanal würde sich automatisch in der um 90° gedrehten Polarisation befinden.

Ein polarisationscodiertes klassisches Übertragungssystem ist denkbar, bei dem ein Bitwert, z.B. "0", einer horizontalen Strahlung, und der andere Bitwert, z.B. "1", einer vertikalen Strahlung zuzuordnen ist. Ähnlich den beiden oben erwähnten, unabhängigen Informationskanälen müsste die Nachregelung der Polarisation eingesetzt werden, damit ein gesendeter Bitwert für den Sender und den Empfänger die gleiche Bedeutung hat. Diese Codierung wird in der Praxis vermieden, weil die Unterscheidung in hohe/geringe Amplitude oder verschiedene Phasen zu einem Referenzsignal viel störsicherer übertragen wird.

Im Gegensatz dazu würde in der Quantentechnologie diese Codierung gut genutzt werden können. Die Erzeugung und die Messung der mit Polarisation codierten Quanteninformation ist ein routinemäßiger Vorgang, der bereits gut beherrschbar ist, und deshalb sind polarisationscodierte Quanten-bits (q-bits) für Quantenanwendungen wie Quantenkryptographie (QKD für "Quanten key distribution", Quanten-Schlüsselerzeugung) sehr attraktiv. Die hier präsentierte Technik beschäftigt sich insbesondere mit der Frage der Verteilung und Stabilisierung der polarisationscodierten Photonen, um die über ein Glasfaserkabel gesendete Information beim Empfänger auch auslesen zu können, ist aber nicht darauf beschränkt, vor allem auch nicht auf die Anwendung bei Telekommunikationswellenlängen im Wellenlängen-Band um 1310 nm oder 1550 nm, auch wenn sie hier besonders vorteilhaft ist.

In einer typischen Anordnung, die in der Quantenkommunikation verwendet wird, fällt meist die Wahl auf Photonen, um als einzelne Träger der Information eingesetzt zu werden. Diese haben geringste Wechselwirkung mit dem Trägermedium (z.B. Glasfaser oder Luft bei Freiraum-Ausbreitung) und behalten ihre Polarisation und damit die gespeicherte Information über lange Distanzen bei. Zwischen der Erzeugung (Präparation) einerseits und der Messung andererseits liegt der Quantenkanal. Besteht dieser Kanal zur Gänze oder teilweise aus optischen Glasfasern, ist in diesen mit einer starken Transformation der Polarisation zu rechnen. Diese kann jedoch wieder rückgängig gemacht werden, solange nicht Polarisations-Moden-Dispersion oder andere Effekte eine Depolarisation bewirken. Solange dies nicht der Fall ist, kann die hier präsentierte Technik den ursprünglichen Zustand wiederherstellen. Genau dies ist dafür essentiell, dass alle Polarisationszustände des Eingangs möglichst genau auf den Ausgang abgebildet werden:

Im Gegensatz zu binären, herkömmlichen Bit-Werten (vergleichbar mit einem Lichtschalter) erfolgt die Informationscodierung in der Quantentechnologie mit q-bits. Diese stellen eine Überlagerung zweier Zustände dar. Dies kann mit Polarisation gut bewerkstelligt werden. Ähnlich wie beim oben erwähnten, aber nicht eingesetzten polarisationscodierten klassischen Verfahren existieren zwei Polarisationszustände eines Photons, die erzeugt werden können. Zusätzlich ist auch eine Überlagerung der Zustände besonders wichtig (Superposition). Dies ist ein wesentlicher Unterschied zur klassischen Art der Informationsverarbeitung, weil erst in der Quantenphysik die Überlagerung von Zuständen Sinn macht.

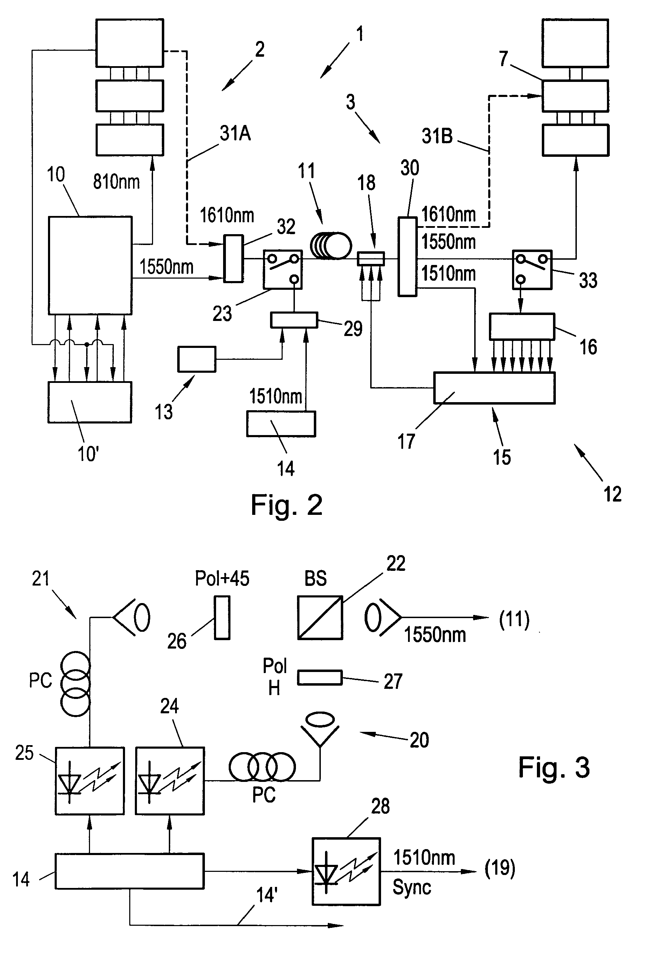

Natürlich ist bei der Quantenkommunikation besonders darauf zu achten, sowohl die Zustände als auch diese Überlagerung ohne Fehler zu transportieren. Dies kann durch die oben erwähnte kommerziellen Systeme nicht erreicht werden, weil dort das Einsatzgebiet die Erhaltung einer Basis war, z.B. die (H,V)-Basis (Polarisation horizontal/vertikal). Im Gegensatz dazu benötigt man in der Quantentechnologie eine Regelung, die mit ausreichend hoher Genauigkeit auch eine zweite Basis regelt. Dabei kann die zweite Basis mit linear polarisiertem Licht, die (+/-)-Basis (linear +45°/-45° polarisiert), oder die zirkular orientierte (L/R)-Basis (links/rechts zirkular polarisiert) verwendet werden. Wenn neben der ersten Basis auch eine zweite Basis geregelt wird, sind alle Überlagerungszustände und damit auch die dritte Basis voll definiert. Es ist nicht mehr nötig, auch diese dritte Basis zu regeln. Es sei hier erwähnt, dass es aus Cheng-Zhi Peng, Jun Zhang, Dong Yang, Wei-Bo Gao, Huai-Xin Ma, Hao Yin, He-Ping Zeng, Tao Yang, Xiang-Bin Wang, und Jian-Wei Pan, "Experimental Long-Distance Decoy-State Quantum Key Distribution Based on Polarization Encoding", Phys. Rev. Lett. 98, 010505 (2007), an sich bekannt ist, zwei abgeschwächte Laserdioden für zwei Basen zu verwenden, die in das System integriert wurden. Die verwendeten Single-Photonen verursachen jedoch eine lange Mittelungszeit im Minutenbereich und können deshalb nicht für die Nachregelung von typischen Polarisationsdriften (klar erkennbar in Fig. 2) verwendet werden.

Jeder mögliche Polarisationszustand lässt sich mit diesen drei unabhängigen Basen eindeutig darstellen, denn es ist möglich, jede zu analysierende Polarisation aus den Polarisationen einer Basis (sogenannte Eigenzustände) zusammenzusetzen. Beispielsweise wird horizontale Polarisation erzeugt, wenn gleich große +45°- und -45°-polarisierte Strahlung überlagert wird. Wählt man die eingestrahlte Polarisation genau in Richtung der Basen (sogenannter Eigenzustand der Basis), so leitet der entsprechende Analysator die gesamte Leistung in einen Arm weiter. Wird z.B. horizontale Polarisation in der (H,V)-Basis analysiert, wird der H-Detektor ein Maximum anzeigen und der V-Detektor sich im Minimum befinden. Fällt hingegen ein Eigenzustand einer anderen Basis auf den Analysator, wird die Strahlung gleichmäßig aufgeteilt. Die horizontale Polarisation erzeugt sowohl in der (+,-)-Basis, also auch in der (L,R)-Basis gleich große Ausgangswerte, die genau die Hälfte des maximalen Wertes betragen. Mit einem Polariometer analysiert man eine unbekannte eintreffende Strahlung in allen drei Basen. Jeder mögliche reine Polarisationszustand wird hierbei eindeutig bestimmt.

Selbst bei einem anfänglich gut eingerichteten gesamten Übertragungssystems (gesamte Polarisationsdrift der Faser wird kompensiert) verursachen Temperaturänderungen und Vibrationen eine zeitabhängige Abweichung der Polarisation, die nachgeführt werden muss. Läuft die Glasfaser über lange Strecken im Freien, ergeben sich durch gleichartige Temperaturänderungen des Tag/Nacht-Zyklus Änderungen, die typischerweise als langsame Driften zutage treten. Befinden sich Faserstrecken auf Brücken, kann eine Vielzahl von unterschiedlich langsamen und schnellen Effekten auf die Faser koppeln. Der technisch herausforderndste Anwendungsfall sind Freileitungen auf z.B. Hochspannungsmasten, denn durch unkoordinierte Pendelbewegungen, ausgelöst durch Wind, können starke Abweichungen des Ausgangszustandes auftreten. Wegen der unterschiedlichsten Anwendungsfälle ist es sinnvoll, die Übertragungsstrecke von der restlichen Quantenanordnung zu trennen und eine gesonderte Nachregelung einzuführen. Dabei ist es besonders wichtig, die benötigten Zeitabläufe so schnell durchzuführen, dass die Nachregelung schneller reagiert als die typischen Zeitkonstanten der Störung die Abweichung von der gewünschten Polarisation beeinflussen.

Ein wichtiges Anliegen der Ausbildung einer Polarisationsregelung ist die Tatsache, dass die Regelschleife die einzelnen Photonen als Nutzsignal so wenig wie möglich negativ beeinflusst. Ein komplett unabhängiger Betrieb wäre wünschenswert. Die Lösung, einen Kanal mit anderer Wellenlänge über die gleiche Faser zu führen, hat den Nachteil, dass die Abhängigkeiten der Polarisationsdrift der beiden Wellenlängen bei Verwendung des Telekommunikationsstandards CWDM ("coarse wavelength division multiplexing") zu unterschiedlich sind. Das hierbei eingesetzte Wellenlängen-Raster von 20 nm ist zu grob. Eine Möglichkeit wäre die Verwendung knapp beieinanderliegender Wellenlängen, die im DWDM ("dense wavelength division multiplexing") vorhanden wäre. Selbst dann ist durch eine leicht unterschiedliche Abhängigkeit des Stellglieds nicht gewährleistet, dass das Nachregelsignal und das Quantensignal die gleiche Polarisation haben werden. Die Erfindung basiert daher darauf, dass das Nachregel-Signal die selbe Wellenlänge wie das Nutzsignal besitzen soll.

Es ist demgemäß Aufgabe der Erfindung, ein Verfahren sowie eine Vorrichtung zum Nachregeln einer Polarisationsdrift wie eingangs angegeben vorzusehen, wobei innerhalb kurzer Zeiten, in Sekunden oder Sekundenbruchteilen, eine Polarisationsverschiebung ausgeregelt werden kann, wobei weiters eine Beeinträchtigung des Nutzsignals, d.h. des zu übertragenden polarisationscodierten optischen Signals, vermieden wird, und wobei insbesondere auch eine Eignung für Quantenkommunikation gegeben ist.

Zur Lösung dieser Aufgabe sieht die Erfindung ein Verfahren bzw. eine Vorrichtung wie in den unabhängigen Ansprüchen definiert vor. Vorteilhafte Ausführungsformen und Weiterbildungen sind in den abhängigen Ansprüchen angegeben.

Um die einzelnen Photonen und das Regelsignal (nachstehend auch optisches Hilfs-Signal genannt), die beide die selbe Wellenlänge besitzen, zusammenzuführen, ist beim vorliegenden System ein optischer Schalter vorgesehen. Dabei wird beim Sender das Nachregelsignal alternativ zum Quantensignal auf den nachzuregelnden Kanal angelegt. Während der Regelung der Polarisation ist somit die Verbindung der Quanten oder allgemein des Nutzsignals unterbrochen. Die Elektronik, die die Polarisationsnachregelung durchführt und den optischen Schalter betätigt, kann auch den oder die Empfänger der Photonen auf der Senderseite außer Betrieb setzen, oder zumindest auch der Elektronik am Sender mitteilen, dass zu dieser Zeit keine Signalpulse für die Detektion für den Detektor auf der Empfängerseite generiert werden müssen. Beim Empfänger wird das Nutzsignal vom Regelsignal idealerweise ebenfalls mit einem optischen Schalter getrennt, oder es kann ein Koppler eingesetzt werden, der das Nutzsignal und das Regelsignal größtenteils (z.B. 95%) durchlässt (gut für das Nutzsignal), hingegen einen Bruchteil des potentiell vorhandenen Regelsignals (z.B. 5%) zur Auswerteoptik (Polariometer) im Regelkreis weiterleitet.

Der Sendeteil weist z.B. zwei Laserdioden mit unterschiedlichen Polarisationen auf. Dabei ist die bevorzugte Wahl auf horizontale (H) und +45°-orientierte Polarisation gefallen. Es ist wichtig, zwei Polarisationen auszuwählen, die nicht beide Eigenzustände einer einzigen Basis sind: die Werte H und V wären als Wahl für die Nachregelung nicht geeignet. Die Ansteuerung der beiden Laserdioden übernimmt eine entsprechende Steuer-Elektronik, die auch den Schalter steuert. Eine eigene Signalisierungsleitung verbindet diese Elektronik mit der Elektronik des Empfangsteils, um das Timing zu analysieren.

Der Empfangsteil bekommt einerseits das optische Signal des Senders, dessen anfangs bekannte Polarisation durch die Übertragung stark verändert wurde, aber auch durch einen Polarisationsregler, vorzugsweise einen piezo-elektrischen Polarisationsregler (vgl. z.B. http://www.generalphotonics.com/PCD-M02.htm) läuft. Verschiedene Piezoelemente üben hier Druck auf die Faser aus, und so kann der Polarisationszustand verändert werden. Der Regelkreis des Empfangsteils versucht nun, durch das Anlegen der richtigen Spannungen an die Piezoelemente ("Piezos") den gewünschten Zustand wieder herzustellen. Dabei analysiert das Polariometer (vgl. z.B. http://www.generalphotonics.com/PolaDetect.htm#data) die ankommende Polarisation in allen Eigenzuständen der drei Basen (H,V), (+,-) und (L,R). Die Elektronik auf der Empfangsseite bekommt vom Sendeteil Informationen, welche Polarisation geschickt wurde, und folgt einem Zeitablauf der angelegten Signale, um die optimalen Ansteuerspannungen zu finden.

Es sei noch erwähnt, dass aus WO 03/077449 A1 und DE 603 02 786 T2 Entzerrersysteme für optische Übertragungen bekannt sind, bei denen störende Einflüsse auf der optischen Übertragungsstrecke mittels empfangsseitiger Kompensatoren (Entzerrer) minimiert werden. Die Parameter der Kompensatoren werden insbesondere durch Hilfssignale (Trainingssequenzen) ermittelt.

Die Erfindung wird nachfolgend anhand von bevorzugten Ausführungsbeispielen, auf die sie jedoch nicht beschränkt sein soll, unter Bezugnahme auf die Zeichnung noch weiter erläutert. Es zeigen:
Fig. 1 ein Schema einer Quantenkommunikationseinrichtung mit einer erfindungsgemäßen Regel-Vorrichtung in einem Blockschaltbild;
Fig. 2 in vergleichbarer Weise ein solches Kommunikationssystem mit einer Vorrichtung zur Polarisationsnachregelung in etwas modifizierter Form;
Fig. 3 ein Schema eines auf der Senderseite für die Erzeugung von Regelsignalen eingesetzten Signalgenerators;
Fig. 4 schematisch den Aufbau eines auf der Empfängerseite im Regelkreis verwendeten Polariometers; und
Fig. 5 eine Pointcare-Kugel in schaubildlicher Darstellung, um die Vorgangsweise bei der vorliegenden Polarisationsdrift-Nachregelung zu veranschaulichen.

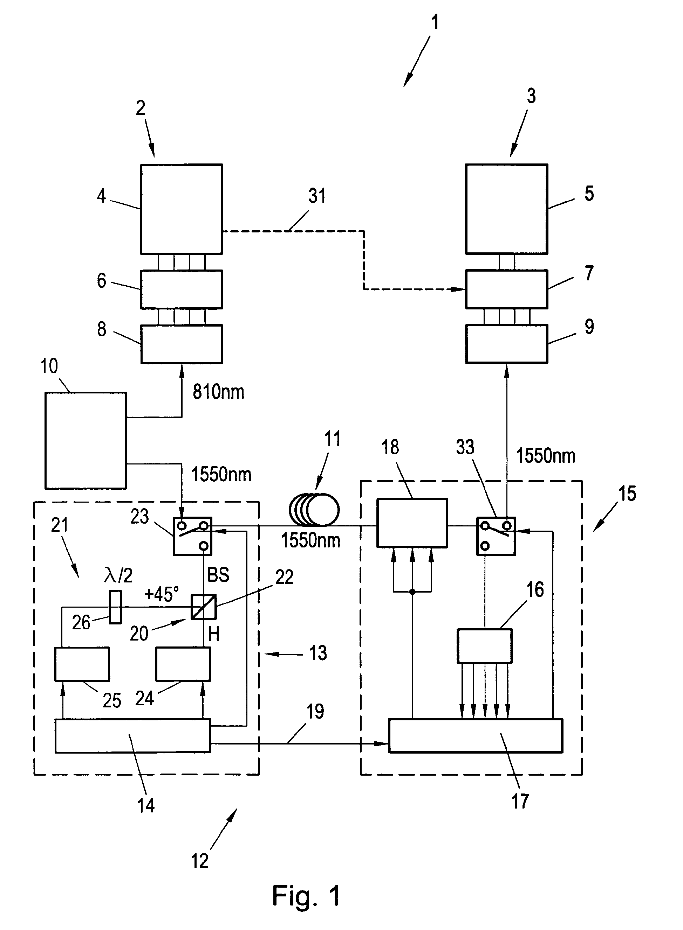

In Fig. 1 ist ein Quantenkommunikationssystem 1 mit einem Sender 2 und einem Empfänger 3 veranschaulicht. Die eigentlichen Kommunikationseinrichtungen, wie ein Rechner 4 bzw. 5, ein 810 nm-Detektor 6 bzw. 1550 nm-Detektor 7 sowie BB84-Protokoll-Module 8 bzw. 9, sind an sich herkömmlich und bedürfen ebenso wie die Photonenquelle 10 (mit Steuerelektronik 10', s. Fig. 2) auf Seiten des Senders, mit der in herkömmlicher Weise verschränkte Photonen erzeugt werden, keiner weiteren Erläuterung.

Weiters ist ein Quantenkanal 11 in Form eines Lichtleiters oder optischen Faserkabels, nachstehend kurz Lichtleiter 11 genannt, zwischen dem Sender 2 und dem Empfänger 3 veranschaulicht.

Diesem Kommunikationssystem 1 ist eine Vorrichtung 12 zur Polarisationsdrift-Nachregelung zugeordnet, welche senderseitig einen Signalgenerator 13 zur Erzeugung von optischen Hilfs-Signalen als Regelsignalen samt zugehöriger Steuerelektronik 14 aufweist. Empfängerseitig ist ein Regelkreis 15 mit einem Polariometer 16 zum Erfassen der Polaritäten der über den Kanal bzw. Lichtleiter 11 übertragenen Regelsignale, ferner einer Auswert- und Ansteuereinheit 17 und einem piezo-elektrischen Polarisationsregler oder -steller 18 vorgesehen. Zwischen den beiden Elektronikeinheiten 14, 17 ist eine Verbindung 19 als Synchronisationskanal zur zeitlichen Abstimmung der Vorgänge bei der Regelung vorgesehen.

Senderseitig werden in zwei Signalpfaden 20, 21 optische Signale mit verschiedenen Polarisationen, z.B. H (horizontal) und +45° (diagonal), erzeugt, die in einem Strahlteiler 22 zusammengeführt und im Fall der Nachregelung über einen optischen Schalter 23 in den Lichtleiter 11 eingespeist werden. Dieser optische Schalter 23 speist entweder das Nutzsignal der Photonenquelle 10 (mit einer Wellenlänge von 1550 nm) oder aber die beiden Regelsignale mit den verschiedenen Polarisationen H, +45° in den Quantenkanal bzw. Lichtleiter 11 ein. Die Regelsignale haben dabei dieselbe Wellenlänge (im gezeigten Beispiel 1550 nm) wie das Nutzsignal. Zeitlich gesehen kann dabei beispielsweise die Einspeisung der Nutzsignale während 99% der Zeit und jene der Regelsignale während 1% erfolgen.

Im Einzelnen werden die beiden Regelsignale beispielhaft von zwei gesonderten Laserquellen 24, 25 erzeugt, die in der Ausführungsform gemäß Fig. 3 durch Laserdioden gebildet sind. Weiters ist in Fig. 1 als Polarisationsdreher ein λ/2-Plättchen 26 gezeigt, um die +45°-Polarisation zu erzielen. Schematisch ist in Fig. 3 im anderen Signalpfad 20 ein H-Polarisator 27 eingezeichnet, der jedoch entfallen kann, wenn die Laserdiode 24 eine entsprechende horizontal polarisierte Strahlung erzeugt.

Für die Synchronisation bzw. zeitliche Steuerung und Triggerung ist mit der Steuerelektronik 14 eine weitere Laserdiode 28 verbunden, die Strahlung mit einer anderen Wellenlänge (z.B. 1510 nm) erzeugt. Diese Strahlung mit der anderen Wellenlänge kann gemäß der Alternative von Fig. 2 auch über einen Multiplexer 29 gemeinsam mit den Regelsignalen des Signalgenerators 13 dem optischen Schalter 23 für die Einspeisung zugeführt werden. Auf der Empfängerseite 3 ist dann ein entsprechender Demultiplexer 30 vorhanden, um die verschiedenen Wellenlängen, wie aus Fig. 2 zu entnehmen, zu trennen und den jeweiligen Komponenten (z.B. die Steuer- oder Gate-Impulse, vgl. die Leitungen 31A, 31B, mit einer Wellenlänge von 1610 nm dem Detektor 7) zuzuführen. Diese Gate-Impulse oder Signalpulse zur Detektion können jedoch auch, wie aus Fig. 1 ersichtlich, über eine gesonderte Leitung 31 übertragen werden. Um die Gate-Impulse gegebenenfalls in die Lichtleiter-Übertragungsstrecke 11 einzuspeisen, ist gemäß Fig. 2 senderseitig ein weiterer Multiplexer 32 vorgesehen.

Weiters ist empfängerseitig ein optischer Schalter oder aber ein Koppler 33 vorhanden, der die Regelsignale aus dem Signalpfad auskoppelt und dem Regelkreis 15 zuführt. Es ist hier anders als auf der Senderseite nicht notwendig, alternativ die Verbindung entweder zum eigentlichen Empfänger oder aber zum Regelkreis 15 herzustellen, weshalb ein Koppler genügt, der beispielsweise einen großen Anteil (90% oder 95%) des Signals dem eigentlichen Empfänger 3 mit dem Detektor 7 zuführt, wogegen ein kleinerer Anteil, beispielsweise 10% oder 5%, dem Regelkreis 15 zugeführt wird.

Dieser Regelkreis 15 wird immer dann aktiviert, und zwar durch Synchronisationssignale (Sync) von der Steuerelektronik 14 auf der Senderseite, wenn Regelsignale zwecks Polarisationsdrift-Nachregelung erzeugt und gesendet werden. In entsprechender Weise werden dann auch die Schalter bzw. Koppler 23, 33 angesteuert.

In Fig. 3 ist weiters noch ein Schalt- und Zeitmarkier-Ausgang 14' der Steuerelektronik 14 gezeigt.

Anstatt, wie beschrieben, Regelsignale mit horizontaler Polarisation und mit einer +45°-Polarisation zu erzeugen, wäre es selbstverständlich auch denkbar, eine vertikale Polarisation (V) und/oder eine -45°-Polarisation vorzusehen. Wichtig ist nur, dass eine erste Basis (z.B. horizontal oder vertikal) und eine zweite Basis (+45° oder -45° oder aber links oder rechts) vorliegen.

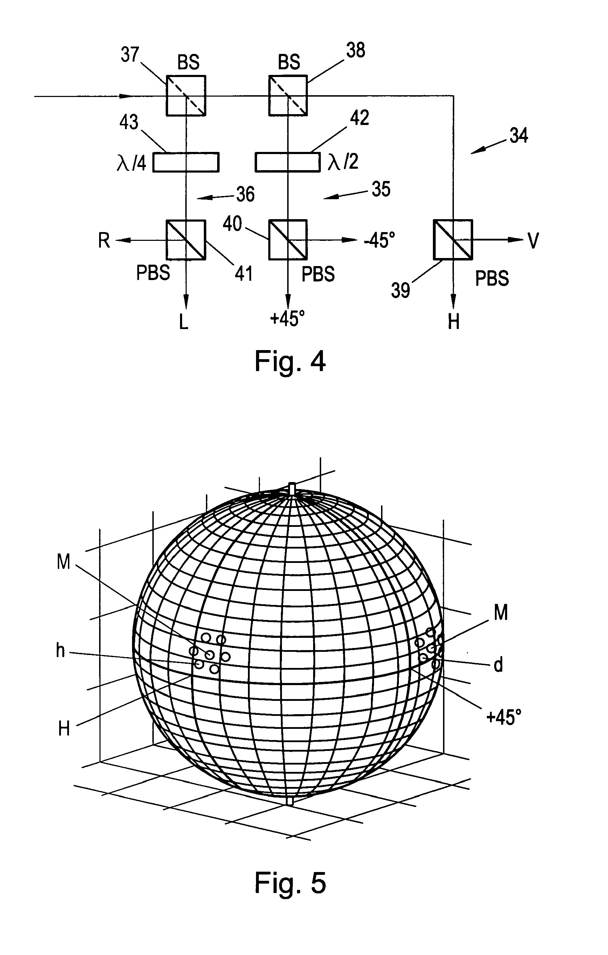

In Fig. 4 ist ein bespielhafter Aufbau des Polariometers 16 schematisch veranschaulicht. Die unbekannte einfallende Polarisation wird in drei verschiedenen Basen, entsprechend drei Signalpfaden 34, 35, 36, analysiert, die durch Vorsehen von zwei Strahlteilern 37, 38 erhalten werden. In den drei Signalpfaden 34, 35, 36 sind wie aus Fig. 4 ersichtlich drei weitere Strahlteiler 39, 40, 41 vorgesehen, und weiters ist im Signalpfad 35 ein λ/2-Plättchen und im Signalpfad 36 ein λ/4-Plättchen angeordnet. Demgemäß wird die (H,V)-Basis ohne Wellenplättchen gemessen, wogegen für die (+,-)-Basis das λ/2-Plättchen und für die (L,R)-Basis das λ/4-Plättchen 36 vorgesehen ist. Auf diese Weise werden die entsprechenden Anteile H/V, +45°/-45° bzw. L,R erfasst.

Im Betrieb wird, nachdem die Elektronik 14 des Sendeteils 2 über den Beginn-Zeitpunkt entschieden hat, zuerst horizontale H-Polarisation erzeugt, der optische Schalter 23 umgelegt und dies auch dem Empfangsteil 3 signalisiert. Der Empfangsteil 3 analysiert den aktuellen Polarisationszustand (die Ist-Polarisation) mit den vom letzten Durchlauf eingestellten Werten an den Piezos des Stellers 18. Anschließend werden auch die Polarisationen analysiert, die durch bewusst veranlasste Abweichung gemessen wurden. Die gemessenen Polarisationen bilden auf einer Pointcare-Kugel, s. Fig. 5, ein Muster mit einem Mittelpunkt M (ursprünglicher Messwert), umkreist von sechs Werten entsprechend den leicht veränderten Spannungen an den Piezos. Der Sender 2 ist so programmiert, dass er nach einer bestimmten Zeit die Laserdioden 24, 25 umschaltet und die andere, +45°-polarisierte Laserdiode 25 aktiviert. Die gleiche Prozedur mit den identen Spannungswerten an den Piezos ermittelt ein ähnliches Muster, das den ursprünglichen Wert des Piezo-Reglers 18 oder -Stellers umkreist, der von der +45°-Polarisation gemessen wurde. Nach dieser Messprozedur wird wieder auf Quantenkommunikation umgeschaltet, und die Elektronik 17 auf der Empfangsseite startet die Auswertung.

Zur Ermittlung der optimalen Werte werden jeweils alle sieben möglichen Stellungen des Piezo-Stellers 18 analysiert, und aus den Werten wird diejenige Spannung ermittelt, die dem Zielpunkt (H; +45°) am nächsten kommt. Für die H- und 45°-polarisierten Laserdioden 24, 25 wird so jeweils eine optimal nutzbare Abweichung von den beiden gemessenen Punkten und dem Zielpunkt ermittelt: Diejenigen Werte, die dem Ziel "H" und "+45°" (Fig. 5) (der Soll-Polarisation) am nächsten liegen, vgl. die Punkte "h" und "d" in Fig. 5, werden für die Berechnung der neuen Spannungswerte herangezogen. Die dabei getätigten Schritte sind abhängig von den erzielbaren Geschwindigkeiten und vom auftretenden Rauschen in den Detektoren und müssen auf die jeweiligen Verhältnisse angepasst werden, um eine optimal schnelle Nachregelung zu erzielen. Die Zeit der für den praktischen Einsatz benötigten Regelung liegt im Sekundenbereich oder Zehntelsekundenbereich, im Gegensatz zu den langsamen Regelungen gemäß dem Stand der Technik. Hier ist es von Bedeutung, dass erfindungsgemäß nicht mit Quanten, sondern mit extra eingekoppeltem klassischem Licht die Nachregelung betrieben wird, so dass die nötigen elektronischen Mittelungen in kürzester Zeit (Sekundenbruchteilen) durchgeführt werden können, wogegen bei Verwendung der Nutzstrahlung selbst zur Regelung Zeiten für die Mittelungen in der Größenordnung von Minuten erforderlich wären.

Zusammenfassung der Eigenschaften der vorliegenden Regelung:
- Zweite Basis eingeführt
- Gleiche Wellenlänge für Regelsignal wie bei Signal
- Optischer Schalter beim Sender zum Umschalten zwischen Nutz- und Regelsignal
- Nur kurzzeitige Unterbrechungen des Quantensignals

Die vorliegende Regelung kompensiert die gesamte Polarisationsdrehung, und fixiert alle Polarisationen. Würde man nur eine Basis einsetzen (wie kommerzielle Geräte), dann würde bei der Regelung auf der Pointcare-Kugel nur eine Achse geregelt (H) werden, die anderen Achsen liefen frei und erhalten eine unerwünschte Drift.

Es ist auch wichtig, dass nicht mit den Quanten, sondern mit gesondert erzeugtem und eingekoppeltem Licht die Regelung durchgeführt wird, um die erforderlichen kurzen Regelzeiten zu erzielen.

## Patentansprüche

1. Verfahren zum Nachregeln einer Polarisationsdrift bei der Übertragung eines polarisationscodierten optischen Signals von einem Sender (2) über einen Lichtleiter (11) zu einem Empfänger (3), **dadurch gekennzeichnet, dass** auf der Seite des Senders (2) optische Hilfs-Signale mit der selben Wellenlänge wie das polarisationscodierte Signal sowie mit voneinander verschiedenen Polarisationen, entsprechend einer ersten und einer zweiten Basis, in den Lichtleiter (11) eingespeist werden, während die Übertragung des polarisationscodierten Signals unterbrochen wird, und dass auf der Seite des Empfängers (3) die optischen Hilfs-Signale vom Lichtleiter (11) abgenommen und mittels eines Polariometers (16) hinsichtlich Verschiebungen der unterschiedlichen Polarisationen überprüft werden, wonach beim Feststellen von Polarisations-Verschiebungen über einen dem Lichtleiter (11) zugeordneten Polarisationsregler (18) die unterschiedlichen, bei der Übertragung verschobenen Polarisationen in Richtung der Polarisations-Sollwerte verschoben werden.

2. Verfahren nach Anspruch 1, **dadurch gekennzeichnet, dass** auf der Seite des Senders (2) zwei Hilfs-Signale, eines mit einer horizontalen oder vertikalen Polarisation und eines mit einer 45°-Polarisation, in den Lichtleiter (11) eingespeist werden.

3. Verfahren nach Anspruch 1 oder 2, **dadurch gekennzeichnet, dass** die optischen Hilfs-Signale mit Hilfe von zwei Laserdioden (24, 25) erzeugt werden.

4. Verfahren nach einem der Ansprüche 1 bis 3, **dadurch gekennzeichnet, dass** die unterschiedlichen Polarisationen der optischen Hilfs-Signale mit Hilfe von in Signalpfaden angeordneten verschiedenen Polarisatoren (26, 27) eingestellt werden.

5. Verfahren nach einem der Ansprüche 1 bis 4, **dadurch gekennzeichnet, dass** auf der Seite des Empfängers (3) mit Hilfe des Polarisationsreglers (18) vorgegebene Polarisations-Abweichungen in verschiedenen Richtungen relativ zu den jeweiligen erfassten Ist-Polarisationen eingeführt werden und für die Nachregelung der Polarisationen jeweils jene Abweichung zugrunde gelegt wird, die am besten den jeweiligen Polarisations-Sollwert herstellt.

6. Verfahren nach einem der Ansprüche 1 bis 5, **dadurch gekennzeichnet, dass** auf der Seite des Senders (2) zugehörige Steuersignale für die zeitliche Abstimmung der Nachregelung auf der Empfänger-Seite erzeugt und zum Empfänger (3) übertragen werden.

7. Verfahren nach Anspruch 6, **dadurch gekennzeichnet, dass** die Steuersignale als optische Signale mit einer von den optischen Hilfs-Signalen unterschiedlichen Wellenlänge erzeugt und ebenfalls über den Lichtleiter (11) zum Empfänger (3) übertragen werden.

8. Verfahren nach Anspruch 7, **dadurch gekennzeichnet, dass** die optischen Hilfs-Signale eine Wellenlänge von 1550 nm und die Steuersignale eine Wellenlänge von 1510 nm aufweisen.

9. Verfahren nach Anspruch 7 oder 8, **dadurch gekennzeichnet, dass** die optischen Hilfs-Signale und die Steuersignale über einen Multiplexer (29) in den Lichtleiter (11) eingespeist werden.

10. Verfahren nach einem der Ansprüche 1 bis 9, **dadurch gekennzeichnet, dass** es im Zuge von Quantenkommunikation angewendet wird.

11. Vorrichtung zum Nachregeln einer Polarisationsdrift bei der Übertragung eines polisationscodierten optischen Signals von einem Sender (2) über einen Lichtleiter (11) zu einem Empfänger (3), **dadurch gekennzeichnet, dass** auf der Seite des Senders (2) ein gesonderter Signalgenerator (13) zur Erzeugung von optischen Hilfs-Signalen mit der selben Wellenlänge wie das zu übertragende polarisationscodierte optische Signal sowie mit voneinander verschiedenen Polarisationen, entsprechend einer ersten und einer zweiten Basis, über einen optischen Schalter (23) mit dem Lichtleiter (11) verbindbar bzw. verbunden ist, wobei der optische Schalter (23) alternativ das polarisationscodierte optische Signal oder die optischen Hilfs-Signale an den Lichtleiter (11)anlegt, und dass auf der Seite des Empfängers (3) ein optischer Schalter oder Koppler (33) zum Auskoppeln der optischen Hilfs-Signale und Zuführen zu einem Regelkreis (15) mit einem die Ist-Polarisationen der Hilfs-Signale erfassenden Polariometer (16), mit einer damit verbundenen Auswert- und Ansteuereinheit (17) und mit einem von dieser angesteuerten, dem Lichtleiter (11) zugeordneten Polarisationsregler (18) vorgesehen ist.

12. Vorrichtung nach Anspruch 11, **dadurch gekennzeichnet, dass** der Signalgenerator (13) zumindest zwei optische Signalpfade (20, 21) aufweist, in denen verschiedene Polarisatoren (26, 27) angeordnet sind.

13. Vorrichtung nach Anspruch 12, **dadurch gekennzeichnet, dass** die zwei Signalpfade (20, 21) in einem Strahlteiler (22) zusammengeführt sind.

14. Vorrichtung nach Anspruch 12 oder 13, **dadurch gekennzeichnet, dass** jeder Signalpfad (20, 21) eine eigene Laserdiode (24, 25) aufweist.

15. Vorrichtung nach einem der Ansprüche 11 bis 14, **dadurch gekennzeichnet, dass** der Polarisationsregler (18) ein piezo-elektrischer Polarisationsregler ist.

16. Vorrichtung nach einem der Ansprüche 11 bis 15, **dadurch gekennzeichnet, dass** die Auswert- und Ansteuereinheit (17) eingerichtet ist, den Polarisationsregler (18) zur Erzeugung von vorgegebenen Polarisations-Abweichungen in verschiedenen Richtungen relativ zu den jeweiligen erfassten Ist-Polarisationen anzusteuern und für die Nachregelung der Polarisationen jeweils jene Abweichung zugrunde zu legen, die am besten den jeweiligen Polarisations-Sollwert herstellt.

17. Vorrichtung nach einem der Ansprüche 11 bis 16, **dadurch gekennzeichnet, dass** auf der Sender-Seite ein Steuersignal-erzeugender Steuerkreis (14) für die Ansteuerung des Signalgenerators (13) und optischen Schalters (23) sowie für zeitliche Abstimmung der Nachregelung auf der Empfänger-Seite vorgesehen ist.

18. Vorrichtung nach Anspruch 17, **dadurch gekennzeichnet, dass** die Steuersignale als optische Signale mit einer von den optischen Hilfs-Signalen unterschiedlichen Wellenlänge erzeugt und ebenfalls über den Lichtleiter (11) zum Empfänger (3) übertragen werden.

19. Vorrichtung nach Anspruch 17 oder 18, **dadurch gekennzeichnet, dass** die optischen Hilfs-Signale und die Steuersignale über einen Multiplexer (29) in den Lichtleiter (11) eingespeist werden.
